# FASCICULE DE BREVET EUROPEEN

(11) **EP 3 325 914 B1**
(45) Date de publication et mention de la délivrance du brevet: **18.03.2020**
(21) Numéro de dépôt: 15753401.7
(22) Date de dépôt: 23.07.2015
(51) Int. Cl.: G01B 3/22, G01B 7/012, G01B 7/00

(54) **DISPOSITIF PALPEUR POUR LE CONTROLE GEOMETRIQUE DE PIECES**
FÜHLERVORRICHTUNG ZUR GEOMETRISCHEN STEUERUNG VON TEILEN
FEELER DEVICE FOR GEOMETRICALLY CONTROLLING PARTS

(43) Date de publication de la demande: 30.05.2018
(73) Titulaire: Actimesure, 37210 Parcay Meslay (FR); PRT Engineering, 37370 Neuvy Le Roi (FR)
(72) Inventeur: TREGRET, Samuel, F-37380 Monnaie (FR); PRUNET, Philippe, F-37370 Neuvy Le Roi (FR); JARRY, Vincent, F-37390 La Membrolle Sur Choisille (FR)
(74) Mandataire: Gicquel, Frédéric
(86) Numéro de dépôt international: PCT/FR2015/052039
(87) Numéro de publication internationale: WO 2017/013309

(56) Documents cités:
- EP-A1- 0 284 737
- FR-A1- 2 997 490
- GB-A- 2 238 616
- US-A- 5 174 039
- US-A- 5 955 881
- US-A1- 2003 197 504

## Description

### DOMAINE TECHNIQUE DE L'INVENTION

L'invention se rapporte au domaine de la détection de la position d'un organe palpeur quand il entre en contact avec une pièce à contrôler.

### ETAT DE LA TECHNIQUE ANTERIEURE

Dans l'industrie il est usuel de contrôler la qualité des pièces et notamment de contrôler leur géométrie, soit parallèlement à la chaine de fabrication (c'est à dire en cours de fabrication) soit en fin de fabrication. Il est alors nécessaire de prévoir un poste de contrôle spécifique dans lequel la pièce à contrôler est amenée pour y être contrôlée par un opérateur. De longue date, une jauge a été utilisée à cet effet ; cette opération de contrôle nécessite un étalonnage préalable pour une valeur étalon donnée et l'opérateur vérifie si la valeur étalon est respectée au niveau de la pièce à contrôler. Même si toutes les pièces d'une série ne sont pas ainsi contrôlées manuellement, un tel contrôle prend du temps, ce qui n'est pas compatible avec des cadences de fabrication soutenues. L'accélération des cadences dans les chaines de fabrication rend un tel contrôle problématique voire inopérant.

De plus, une telle opération est couteuse en temps, en matériel ; en outre des problèmes de fiabilité peuvent survenir. C'est pourquoi on a cherché un traitement plus rapide des pièces à contrôler qui par ailleurs soit fiable et peu couteux.

La demande de brevet FR 2 997 490 répond partiellement à ce problème en proposant un dispositif de contrôle géométrique semi automatisé, à encodage magnétique. Dans ce dispositif, l'organe palpeur est porté par une tige montée mobile en translation à l'intérieur d'un boitier support, en regard de moyens capteurs magnétiques fixes portés par le boitier et sensibles à des repères aimantés d'encodage magnétiques que la tige porte pour la détection de la position de cette tige. Vis-à-vis de l'art antérieur ce dispositif constitue une amélioration en ce qu'il permet de réaliser une mesure fiable, solide avec un appareillage peu couteux. Dans ce système le boitier intègre l'ensemble des composants nécessaires d'une part à la détection d'un contact de moyens palpeurs et d'autre part à l'exploitation de cette détection pour mesurer le déplacement des moyens palpeurs, de telle sorte que ce dispositif est autonome et permet des mesures automatisées à cadence assez soutenue.

Cependant des améliorations se révèlent nécessaires notamment au niveau de la fiabilité du réglage, de la rapidité de déplacement de la tige du palpeur ou encore du contact de la tige avec la pièce à contrôler ; la précision de la mesure est un autre paramètre qui requiert une amélioration car demandée par les industriels. US 5 174 039 A, US 2003/197504 A1, EP 0 284 737 A1 et GB 2 238 A décrivent des dispositif palpeurs. US 5 955 881 A décrit un capteur de position.

### EXPOSE DE L'INVENTION

L'invention vise à remédier aux inconvénients de l'état de la technique notamment en ce qui concerne la fiabilité de la mesure, sa rapidité ainsi que la protection de la tige du palpeur. Par tige ou tige de contact, on entend l'élément allongé dont l'extrémité entre en contact avec la pièce à mesurer.

L'invention concerne un dispositif palpeur pour le contrôle géométrique de pièces, selon la revendication indépendante 1. Les modes particuliers de réalisation de l'invention sont définis dans les revendications dépendantes.

Selon l'invention, la tige coopère avec un capteur magnétique pour la détection de sa position.

Selon l'invention, ladite tige de contact est entrainée en translation par friction directe ou indirecte avec l'axe rotatif d'un moteur.

Ces caractéristiques améliorent la fiabilité de la mesure, sa rapidité ainsi que la protection de la tige du palpeur.

De façon intéressante, le dispositif selon l'invention comprend une pièce de contre-appui ou de retenue pour le contre appui du contact à friction de la tige du palpeur avec l'axe rotatif du moteur, ladite pièce étant fixée sur ledit boitier.

Selon l'invention, la pièce de contre-appui ou de retenue comprend un galet.

Selon l'invention, le dispositif comprend une bague de guidage de ladite tige qui s'étend partiellement à l'intérieur du boitier et y présente une découpe apte à constituer deux arêtes d'appui.

Selon un autre aspect de l'invention, le dispositif palpeur comprend au moins une carte électronique et un logiciel de gestion de la position de ladite tige, coopérant avec le microcontrôleur.

De façon plus précise, le dispositif palpeur comprend une première et une deuxième cartes électroniques, la première permet l'acquisition de la mesure de la position de la tige, la deuxième carte permet le traitement de la mesure de la position ainsi que l'acquisition et le traitement de l'effort exercé sur la tige de contact. Il est ici intéressant de désolidariser mécaniquement les fonctions gérées par la première et par la deuxième cartes car on améliore la fiabilité du réglage, notamment le réglage du point 0.

Selon une autre caractéristique, le dispositif comprend un moyen d'ajustement de la pression exercée par la tige de contact sur la pièce à contrôler, paramétrable par le moyen de pilotage dudit moteur. On améliore ainsi la gestion de la force exercée par la tige.

De façon intéressante, le dispositif selon l'invention comprend une piste magnétique placée sur ladite tige, pour détecter sa position par coopération avec le moyen d'acquisition magnétique. Le fait de positionner une piste magnétique directement sur la tige constitue une simplification du système qui augmente à la fois la fiabilité et la précision de la mesure.

Selon une variante intéressante de l'invention, le moteur utilisé est de type linéaire. Avantageusement, le moteur peut être disposé dans le prolongement de la tige et comprendre un empilement (ou alignement) d'aimants de polarités alternativement inversées mobiles avec la tige, et un stator piloté par l'une desdites cartes électroniques. Cette variante permet de réduire l'encombrement du dispositif et aussi d'en augmenter la durée de vie, comparativement à l'utilisation d'un moteur rotatif par exemple.

De façon spécifique et préférée, dans une variante comprenant un moteur linéaire, ledit stator est fixé dans ledit boitier et comprend un solénoïde dont les impulsions agissent sur l'empilement d'aimants afin d'assurer le déplacement de ladite tige.

Conformément à une autre variante de l'invention, ledit empilement d'aimants coopère avec un détecteur de position et ledit stator afin d'assurer à la fois le déplacement de la tige et la détection de la position de la tige.

En outre, le dispositif selon l'invention peut comprendre des moyens d'étanchéité et de protection coopérant avec au moins une partie dudit boitier et/ou de ladite tige.

Par ailleurs, le dispositif selon l'invention peut comprendre un afficheur pour la lecture d'au moins un paramètre de fonctionnement et/ou pour le contrôle dudit fonctionnement. L'afficheur permet avantageusement une lecture des informations et un paramétrage in situ et instantané, d'où une réactivité améliorée.

### BREVE DESCRIPTION DES FIGURES

D'autres caractéristiques et avantages de l'invention ressortiront à la lecture de la description qui suit, en référence aux figures annexées, qui illustrent :
- la figure 1, montre un dispositif palpeur selon un premier mode de réalisation de l'invention;
- la figure 2 illustre plus en détail l'entrainement de la tige du dispositif palpeur ;
- la figure 3 illustre une bague de retenue fixée sur le boitier ;
- la figure 4 montre la bague de retenue en perspective ;
- la figure 5, montre les principaux éléments constitutifs de l'invention ;
- la figure 6 illustre la motorisation d'u mode de réalisation du dispositif selon l'invention ;
- la figure 7 montre la tige du palpeur portant une bande magnétique ;
- la figure 8 est un schéma montrant partiellement un deuxième mode de réalisation de l'invention ; et
- la figure 9 est un schéma montrant partiellement un troisième mode de réalisation de l'invention.

Pour plus de clarté, les éléments identiques ou similaires sont repérés par des signes de référence identiques sur l'ensemble des figures.

### DESCRIPTION DETAILLEE D'UN MODE DE REALISATION

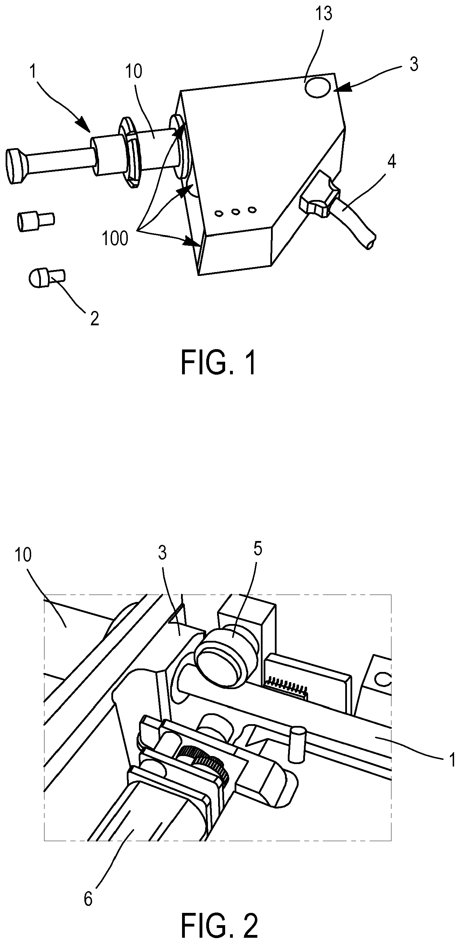

La figure 1 illustre un dispositif palpeur selon l'invention, vu de l'extérieur, dans son ensemble. Ce dispositif comprend notamment une tige 1 dite de contact dont l'extrémité libre distale est munie d'une tête 2 apte à entrer en contact avec la pièce à mesurer, plus précisément avec la surface choisie de la pièce à mesurer. La tige 1 est mobile en translation selon son axe longitudinal et elle est partiellement logée à l'intérieur du boitier 3 qui protège l'ensemble des éléments fonctionnels du dispositif palpeur. Plusieurs formes de têtes sont envisageables sans sortir du cadre de l'invention ; la forme est choisie par l'homme de métier. Un manchon ou bague de guidage 10 peut être prévu afin de guider et de protéger l'extrémité distale de la tige 1 en position rentrée. Le manchon de guidage 10 est fixé et positionné sur la face appropriée du boitier 3. En outre un câble de connexion électrique 4 est prévu, dépassant à l'extérieur du boitier 3 qui présente une ouverture appropriée pour le passage et la fixation d'un port de connexion à un moyen de traitement de type ordinateur (non représenté).

La figure 2 montre une partie de l'intérieur du boitier et plus particulièrement la liaison et l'entrainement de la tige 1 selon un premier mode de réalisation de l'invention : la tige est en effet entrainée en translation par friction directe ou indirecte avec l'axe de rotation d'un moteur 6, perpendiculaire à l'axe de la tige 1. Une pièce d'appui ou de retenue telle qu'un galet 5 lié au boitier 3 permet de créer une contre force à la force de placage de l'axe du moteur sur la tige 1 du palpeur. L'axe ou arbre de sortie du moteur 6 peut coopérer avec un système de transmission de type roues - pignons-crémaillère. Tout système de transmission mécaniquement équivalent entre dans le cadre de l'invention. Ce système d'entrainement par friction de la tige 1 est intéressant car en cas de force importante exercée sur l'extrémité de la tige 1 ou bien en cas de choc, la translation de la tige 1 peut être arrêtée sans pour autant endommager la tige. Il y a alors glissement de la tige 1 vis-à-vis de l'axe du moteur 6, ce qui empêche toute cassure ou endommagement de la tige 1.

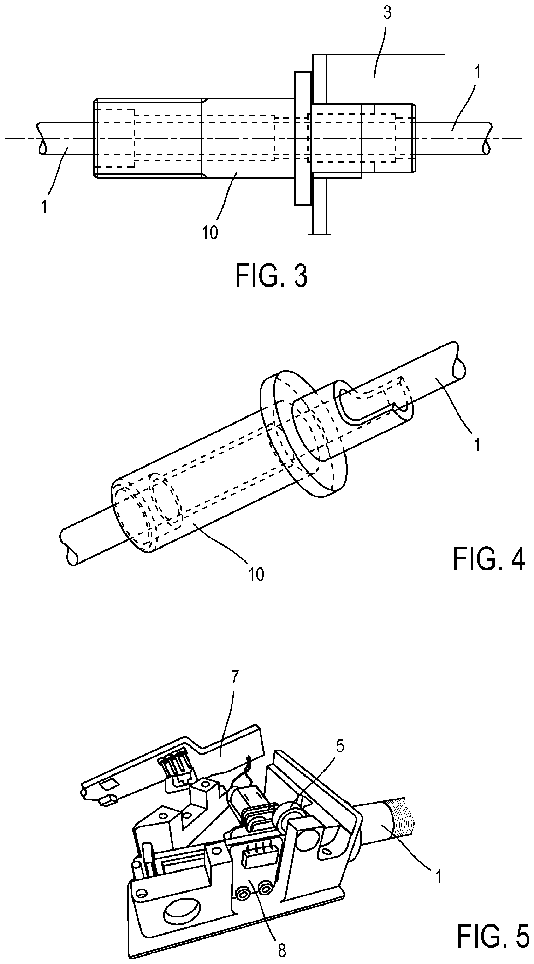

La figure 3 et la figure 4 montrent une autre forme de réalisation de la pièce d'appui ou de retenue qui comprend ici la bague de guidage 10 modifiée vis-à-vis de celle de la figure 2. La bague de guidage modifiée remplace le galet 5 illustré sur la figure 2. La bague de guidage 10 s'étend ici partiellement à l'intérieur du boitier 3 où elle y présente une découpe telle que visible sur la figure 3. La découpe est donc réalisée à l'extrémité de la bague 10 située à l'intérieur du boitier 3 ; cette extrémité se présente comme un demi-cylindre qui vient coiffer la surface supérieure de la tige 1 à ce niveau. Cet arrangement permet de limiter la surface de contact et donc de garantir un frottement minimal lors du glissement de la tige 1, tout en conservant sa fonction de retenue lors du déplacement de la tige 1.

La figure 5 montre sous une autre vue l'intérieur du boitier 3 ; plus particulièrement la figure 5 montre la présence de plusieurs cartes électroniques 7, 8 ; ces cartes 7,8 sont bien entendu placées et protégées par le capot ou boitier 3. A titre préférentiel, l'une des cartes dite première carte 7 permet de gérer la plupart des fonctionnalités du dispositif, notamment le fonctionnement du moteur 6 ainsi que celui des composants optiques associés ; ainsi la première carte permet avantageusement de détecter les positions extrêmes (de fin de course) de la tige 1. La deuxième carte électronique 8 est ici dédiée à l'acquisition de la mesure de la position de la tige ; elle est connectée à la tige 1 et comprend les composants nécessaires à sa fonction principale ; le réglage du point 0 est notamment géré par la deuxième carte électronique 8.

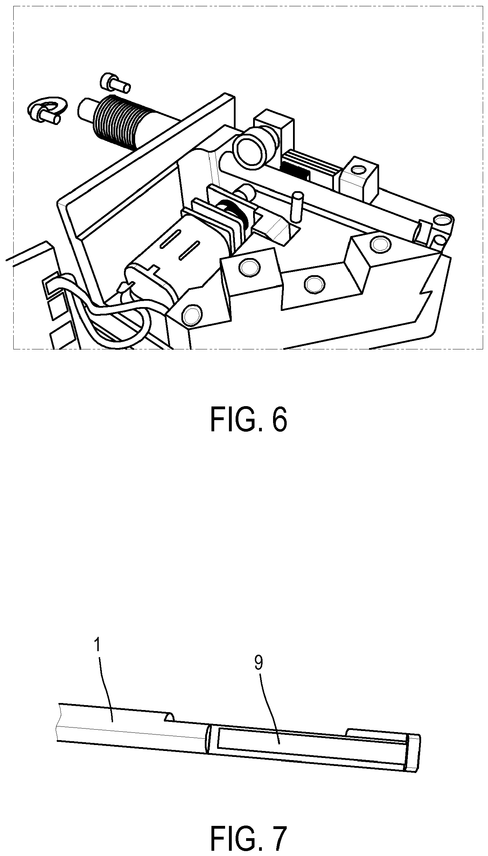

La figure 6 illustre l'agencement des composants à l'intérieur du boitier 3 qui présente ici une forme adaptée, sensiblement selon un triangle rectangle, sur une hauteur H. La tige 1 s'étend parallèlement à l'un des côtés droit du triangle tandis que le moteur 6 s'étend sensiblement selon l'autre côté droit du triangle. La deuxième carte électronique 8 s'étend selon la hauteur ou épaisseur du boitier 3 tandis que la première carte électronique, de forme sensiblement triangulaire, est placée selon un plan principal du boitier 3. Bien entendu la forme du boitier 3 est adaptée au mode de réalisation envisagé de sorte que la forme montrée sur les figures 1 à 4 est illustrative et non limitative.

La figure 7 montre une partie de la tige 1 qui porte une bande magnétique 9 placée sur un méplat spécialement adapté. Le fait que la bande magnétique 9 soit ici directement fixée sur la tige 1 augmente la fiabilité et la précision de la mesure ; aucune pièce intermédiaire ne perturbe l'acquisition de la mesure de la position de la tige 1.Selon ce mode de réalisation de l'invention, la bande magnétique 9 comprend des repères aimantés d'encodage disposés le long de la bande avec un pas régulier, par exemple de 2 mm. De façon correspondante, des moyens capteurs peuvent être disposés sur la deuxième carte électronique, pour la lecture de la position de la tige 1.

Des moyens de détection de la position de la tige 1 sont prévus sur la deuxième carte électronique 8. La tige se déplace ainsi entre une position initiale ou rentrée selon laquelle seule la tête 2 dépasse à l'extérieur du boitier 3, et une position maximale sortie dans laquelle la tête 2 se situe au plus loin du boitier 3. La pièce à contrôler se situe entre ces deux positions.

Le principe de détection de la position de la tige 1 est basé sur une détection par lecture du champ magnétique. Les inversions de polarités apparaissent plus ou moins régulièrement sur la bande magnétique et sont mises en correspondance avec des valeurs réelles mesurées lors d'un processus de calibration. Une table de correspondance est ainsi construite, elle est propre à chaque dispositif. Lorsque la tige 1 du dispositif palpeur touche la pièce à mesurer, la valeur magnétique lue est mise en relation avec sa valeur correspondante enregistrée dans la mémoire du microcontrôleur.

L'information de position de la tige est préférentiellement transmise en temps réel à des moyens logiciels aptes à calculer son déplacement et donc celui de son organe palpeur, entre une position initiale et la position de contact avec la pièce à contrôler.

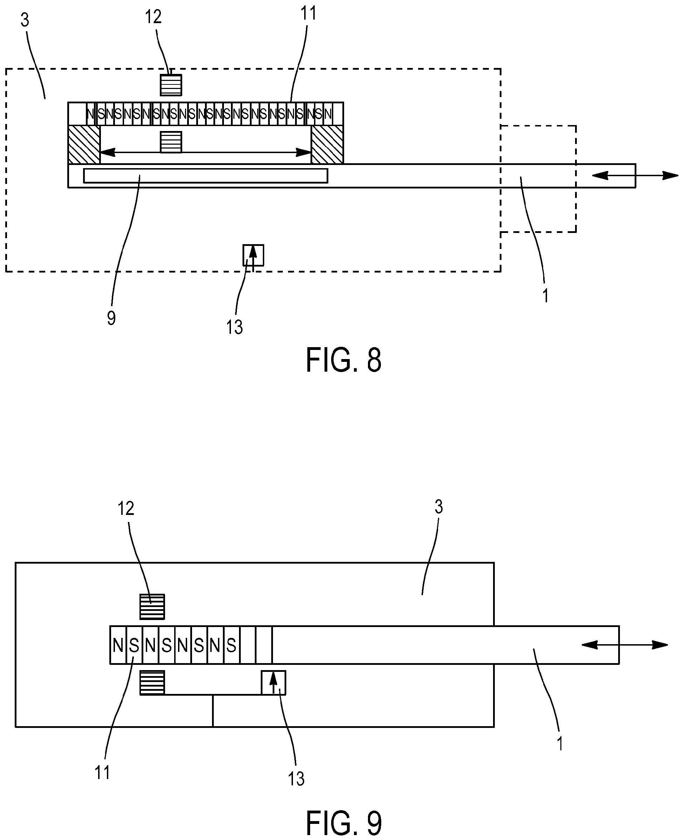

Selon un deuxième mode de réalisation de l'invention tel que schématisé en figure 8, un moteur linéaire est prévu, disposé dans le prolongement de la tige 1. Une piste magnétique 11 constituée d'un empilement d'aimants permanents de polarités inversées alternativement, est solidarisée à la tige 1 par exemple à travers un matériau réluctant. Un détecteur de position fixe 13, par exemple faisant partie de la deuxième carte électronique 8, permet de lire la position de la tige mobile 1. Un stator 12 composé d'un solénoïde impulse un champ magnétique changeant de sens selon le courant qui lui est appliqué. Le solénoïde exerce donc alternativement une attraction et une répulsion sur l'empilement d'aimants (piste magnétique 11) qui se trouve ainsi soumis à une force qui le contraint à se déplacer linéairement suivant les éléments de guidage mécanique mis en place. Un moteur linéaire connu en soi, mais choisi de façon adéquate à l'application envisagée est donc prévu. Le moteur linéaire permet de réduire le volume du dispositif ; en outre ce choix en augmente sa durée de vie notamment car les frottements sont réduits. A titre illustratif, un servomoteur de la marque Faulhaber référence LM0830 01 FMM peut être utilisé.

Selon un troisième mode de réalisation de l'invention, et afin de simplifier et de maîtriser la conception du palpeur, la figure 9 montre une alternative du deuxième mode de réalisation, où la tige 1 comprend un empilement d'aimants 11 qui remplissent une double fonction. La première fonction consiste à assurer la mobilité de la tige 1 via le même système que pour la figure 6. C'est-à-dire un ensemble de solénoïdes 12 alimentés de sorte à créer un champ magnétique qui assure le déplacement linéaire de la tige 1.La deuxième fonction dédiée à l'empilement d'aimants 11 consiste à lire la position de la tige 1 via le même dispositif que pour la version classique du palpeur. Cette deuxième fonction permet donc l'acquisition de la mesure de la position de la tige 1. Le troisième mode de réalisation peut donc être considéré comme une simplification du deuxième mode de réalisation, notamment parce qu'il met en œuvre un nombre réduit de composants.

Bien entendu dans tous les cas, un lecteur 13 de la position de la tige 1 est prévu, fixé préférentiellement sur la deuxième carte électronique 8

De façon intéressante, le dispositif selon l'invention peut être muni de moyens aptes à assurer son étanchéité et/ou sa protection en milieu hostile. Ainsi un vernis protecteur peut couvrir les zones sensibles du dispositif telles que les parties conductrices non couvertes et protégées de la ou des cartes électroniques. Par ailleurs les zones 100 repérées sur la figure 1 peuvent être traitées de façon spécifique : un lubrifiant peut être prévu à la jonction entre la tige 1 et l'entrée du nez ; un joint en élastomère ou en silicone souple peut recouvrir une partie de la tige 1 ; un joint souple peut être monté enchâssé dans un rainurage du boitier. Au niveau de la jonction entre le câble USB 4 et la prise intérieure au boitier 3, une pièce spécifique munie de lèvres en élastomère peut être prévue. Cette pièce épouse la forme du câble USB et empêche la poussière et les liquides de pénétrer à l'intérieur du boitier 3. De façon plus générale l'étanchéité peut être réalisée en recouvrant l'ensemble du dispositif par une substance ultrahydrophobe telle que commercialisée sous la marque ' ultra hydrophobe'. Ce produit est un revêtement super hydrophobe et oléophobe qui va repousser la majorité des liquides. Ce produit utilise la technique de la nano technologie pour créer un revêtement et une barrière d'air sur la surface d'un objet. Cette barrière repousse l'eau, l'huile, le béton humide et autres liquides.

Par ailleurs le dispositif selon l'invention peut comprendre un afficheur apte à afficher des informations telles que : valeur de la dernière mesure ; appellation du palpeur ; appellation de la jauge ; identification du palpeur ; nombre de cycles effectués. De plus un actionneur 13 permet avantageusement : de naviguer dans un menu afin d'afficher certaines informations ; de déclencher une mesure ; de déclarer une mesure comme le point origine ou zéro. Bien entendu de nombreux autres affichages et commandes sont possibles.

Un aspect intéressant de l'invention consiste à adapter une bague aimantée sur le manchon 10 afin de fixer rapidement le dispositif palpeur sur la pièce à mesurer.

D'autres caractéristiques d'ordre ergonomique, technique ou additionnel peuvent être définies par l'homme de métier sans sortir du cadre de l'invention telle que revendiquée.

## Revendications

1. Dispositif palpeur pour le contrôle géométrique de pièces, apte à déterminer la position d'un organe palpeur lorsqu'il entre en contact avec une pièce à contrôler, comprenant une tige de contact (1) mobile en translation à l'intérieur d'un boîtier (3) par friction directe ou indirecte avec l'axe rotatif d'un moteur (6), un microcontrôleur de commande du mouvement de la tige, le dispositif est tel que la tige de contact (1) coopère avec un capteur magnétique pour la détection de sa position et qu'il comprend une pièce de contre appui ou de retenue (5) pour le contre appui du contact à friction de la tige (1) du palpeur avec l'axe rotatif du moteur, ladite pièce de contre appui ou de retenue comprenant un galet fixé sur le boitier (3).

2. Dispositif palpeur selon la revendication 1 **caractérisé en ce qu'**il comprend une bague de guidage (10) de ladite tige (1) qui s'étend partiellement à l'intérieur du boitier (3).

3. Dispositif palpeur selon la revendication précédente, **caractérisé en ce que** la bague de guidage (10) présente une découpe apte à constituer deux arêtes d'appui, la découpe étant située à l'intérieur du boitier (3).

4. Dispositif selon l'une des revendications précédentes **caractérisé en ce qu'**il comprend au moins une carte électronique (7, 8) et un logiciel de gestion de la position de ladite tige (1), coopérant avec ledit microcontrôleur.

5. Dispositif palpeur selon la revendication 4 **caractérisé en ce qu'**il comprend une première (7) et une deuxième (8) cartes électroniques, la première permet l'acquisition de la mesure de la position de la tige, la deuxième carte permet le traitement de la mesure de la position ainsi que l'acquisition et le traitement de l'effort exercé sur la tige de contact.

6. Dispositif selon l'une des revendications précédentes **caractérisée en ce qu'**il comprend un moyen d'ajustement de la pression exercée par la tige sur la pièce à contrôler, paramétrable par le moyen de pilotage dudit moteur.

7. Dispositif selon l'une des revendications précédentes **caractérisé en ce qu'**il comprend une piste magnétique (9) placée sur ladite tige de contact (1), pour détecter sa position par coopération avec le moyen d'acquisition magnétique.

8. Dispositif selon l'une quelconque des revendications précédentes, **caractérisé en ce que** ledit moteur est de type linéaire.

9. Dispositif selon la revendication précédente **caractérisé en ce que** ledit moteur est disposé dans le prolongement de ladite tige de contact, et comprend un empilement d'aimants (11) de polarités alternativement inversées mobiles avec la tige, et un stator (12) piloté par l'une desdites cartes électroniques.

10. Dispositif selon la revendication 9 **caractérisé en ce que** ledit stator (12) est fixé dans ledit boîtier (3) et comprend un solénoïde dont les impulsions agissent sur l'empilement d'aimants afin d'assurer le déplacement de ladite tige (1).

11. Dispositif selon la revendication 10 **caractérisé en ce que** ledit empilement d'aimants (11) coopère avec un détecteur de position (13) et ledit stator (12) afin d'assurer à la fois le déplacement de la tige (11) et la détection de la position de la tige (1).

12. Dispositif selon l'une des revendications précédentes **caractérisé en ce qu'**il comprend des moyens d'étanchéité et de protection (100) coopérant avec au moins une partie dudit boîtier et/ou de ladite tige.

13. Dispositif selon l'une quelconque des revendications précédentes **caractérisé en ce qu'**il comprend un afficheur pour la lecture d'au moins un paramètre de fonctionnement et/ou pour le contrôle dudit fonctionnement.

## Patentansprüche

1. Tastvorrichtung für die geometrische Prüfung von Werkstücken, die in der Lage ist, die Position eines Tastglieds zu bestimmen, wenn sie mit einem zu prüfenden Werkstück in Kontakt kommt, umfassend einen Kontaktstift (1), der im Inneren eines Gehäuses (3) durch direkte oder indirekte Reibung mit der Drehachse eines Motors (6) translationsbeweglich ist, einen Mikrocontroller zum Steuern der Bewegung des Stifts, wobei die Vorrichtung derart ist, dass der Kontaktstift (1) zum Erkennen seiner Position mit einem Magnetsensor zusammenwirkt, und dass sie ein Gegenlager- oder Halteteil (5) zum Gegenlagern des Reibkontakts des Stifts (1) des Tasters mit der Drehwelle des Motors umfasst, wobei das Gegenlager- oder Halteteil eine Rolle umfasst, die am Gehäuse (3) befestigt ist.

2. Tastvorrichtung nach Anspruch 1, **dadurch gekennzeichnet, dass** sie einen Ring (10) zum Führen des Stifts (1) umfasst, der sich teilweise im Inneren des Gehäuses (3) erstreckt.

3. Tastvorrichtung nach dem vorstehenden Anspruch, **dadurch gekennzeichnet, dass** der Führungsring (10) einen Einschnitt aufweist, der in der Lage ist, zwei Lagerkanten zu bilden, wobei der Einschnitt im Inneren des Gehäuses (3) liegt.

4. Vorrichtung nach einem der vorstehenden Ansprüche, **dadurch gekennzeichnet, dass** sie mindestens eine elektronische Karte (7, 8) und eine Software zum Verwalten der Position des Stifts (1) umfasst, die mit dem Mikrocontroller zusammenwirkt.

5. Tastvorrichtung nach Anspruch 4, **dadurch gekennzeichnet, dass** sie eine erste (7) und eine zweite elektronische Karte (8) umfasst, die erste das Erfassen der Messung der Position des Stifts ermöglicht, die zweite Karte das Verarbeiten der Messung der Position sowie das Erfassen und das Verarbeiten der Kraft ermöglicht, die auf den Kontaktstift ausgeübt wird.

6. Vorrichtung nach einem der vorstehenden Ansprüche, **dadurch gekennzeichnet, dass** sie ein Mittel zum Einstellen des vom Stift auf das zu prüfende Werkstück ausgeübten Drucks umfasst, das über das Mittel zum Ansteuern des Motors parametriert werden kann.

7. Vorrichtung nach einem der vorstehenden Ansprüche, **dadurch gekennzeichnet, dass** sie einen Magnetstreifen (9) umfasst, der am Kontaktstift (1) platziert ist, um ihre Position durch Zusammenwirken mit dem magnetischen Erfassungsmittel zu erkennen.

8. Vorrichtung nach einem der vorstehenden Ansprüche, **dadurch gekennzeichnet, dass** der Motor vom linearen Typ ist.

9. Vorrichtung nach dem vorstehenden Anspruch, **dadurch gekennzeichnet, dass** der Motor in der Verlängerung des Kontaktstifts angeordnet ist und einen Stapel Magnete (11) mit abwechselnd entgegengesetzten Polaritäten, die mit dem Stift beweglich sind, und einen Stator (12) umfasst, der von einer der elektronischen Karten angesteuert wird.

10. Vorrichtung nach Anspruch 9, **dadurch gekennzeichnet, dass** der Stator (12) im Gehäuse (3) befestigt ist und ein Solenoid umfasst, dessen Impulse auf den Stapel Magnete wirken, um die Verlagerung des Stifts (1) sicherzustellen.

11. Vorrichtung nach Anspruch 10, **dadurch gekennzeichnet, dass** der Stapel Magnete (11) mit einem Positionssensor (13) und dem Stator (12) zusammenwirkt, um gleichzeitig die Verlagerung des Stifts (11) und das Erkennen der Position des Stifts (1) sicherzustellen.

12. Vorrichtung nach einem der vorstehenden Ansprüche, **dadurch gekennzeichnet, dass** sie Dicht- und Schutzmittel (100) umfasst, die mit mindestens einem Teil des Gehäuses und/oder des Stifts zusammenwirken.

13. Vorrichtung nach einem der vorstehenden Ansprüche, **dadurch gekennzeichnet, dass** sie eine Anzeige zum Ablesen mindestens eines Betriebsparameters und/oder zum Prüfen des Betriebs umfasst.

## Claims

1. Feeler device for geometrically controlling parts, capable of determining the position of a feeler member when it comes into contact with a part to be controlled, comprising a contact rod (1) movable in translation inside a casing (3) by direct or indirect friction with the rotating axis of a motor (6), a microcontroller for controlling the movement of the rod, the device being such that the contact rod (1) cooperates with a magnetic sensor for detecting the position thereof, and that it comprises a supporting or retaining countersupporting part (5) for countersupporting the friction contact of the rod (1) of the feeler with the rotating axis of the motor, said countersupporting or retaining part comprising a roller fixed on the casing (3).

2. Feeler device according to claim 1, **characterised in that** it comprises a ring (10) for guiding said rod (1) which extends partially inside the casing (3).

3. Feeler device according to the preceding claim, **characterised in that** the guiding ring (10) has a slit capable of constituting two supporting edges, the slit being located inside the casing (3).

4. Device according to one of the preceding claims, **characterised in that** it comprises at least one electronic board (7, 8) and a piece of software for managing the position of said rod (1), cooperating with said microcontroller.

5. Feeler device according to claim 4, **characterised in that** it comprises a first (7) and a second (8) electronic board, the first makes it possible to acquire the measurement of the position of the rod, the second board makes it possible to process the measurement of the position as well as acquiring and processing the force exerted on the contact rod.

6. Device according to one of the preceding claims, **characterised in that** it comprises a means for adjusting the pressure exerted by the rod on the part to be controlled, which can be configured by the means for controlling said motor.

7. Device according to one of the preceding claims, **characterised in that** it comprises a magnetic track (9) placed on said contact rod (1), to detect the position thereof by cooperation with the magnetic acquisition means.

8. Device according to any one of the preceding claims, **characterised in that** said motor is of the linear type.

9. Device according to the preceding claim, **characterised in that** said motor is arranged in the extension of said contact rod, and comprises a stack of magnets (11) of alternatively inverted polarities, movable with the rod, and a stator (12) controlled by one of said electronic boards.

10. Device according to claim 9, **characterised in that** said stator (12) is fixed in said casing (3) and comprises a solenoid of which the pulses act on the stack of magnets in order to ensure the movement of said rod (1).

11. Device according to claim 10, **characterised in that** said stack of magnets (11) cooperates with a position detector (13) and said stator (12) in order to ensure both the movement of the rod (11) and the detection of the position of the rod (1).

12. Device according to one of the preceding claims, **characterised in that** it comprises sealing and protective means (100) cooperating with at least some of said casing and/or said rod.

13. Device according to any one of the preceding claims, **characterised in that** it comprises a display unit for reading at least one operation parameter and/or for controlling said operation.
